## Europäisches Patentamt
## European Patent Office
## Office européen des brevets

(19)

(11) Veröffentlichungsnummer: **0 106 344**
**A2**

(12) # EUROPÄISCHE PATENTANMELDUNG

(21) Anmeldenummer: 83110316.3

(22) Anmeldetag: 15.10.83

(51) Int. Cl.³: **F 24 H 1/28**

(30) Priorität: 19.10.82 DE 3238603
02.03.83 DE 3307330
02.07.83 DE 3323998
02.07.83 DE 3323997

(43) Veröffentlichungstag der Anmeldung:
25.04.84 Patentblatt 84/17

(84) Benannte Vertragsstaaten:
AT BE CH FR GB IT LI LU NL SE

(71) Anmelder: Viessmann, Hans, Dr.
Im Hain
D-3559 Battenberg/Eder(DE)

(72) Erfinder: Viessmann, Hans, Dr.
Im Hain
D-3559 Battenberg/Eder(DE)

(74) Vertreter: Wolf, Günter, Dipl.Ing.
Patentanwälte Dipl.-Ing. Amthor Dipl.-Ing. Wolf Postfach
70 02 45 An der Mainbrücke 16
D-6450 Hanau 7(DE)

(54) **Kondensationsheizkessel.**

(57) Der Kondensationsheizkessel besteht aus einem wasser-führenden, Vor- und Rücklaufanschlüsse aufweisenden Gehäuse mit Brennkammer und Heizgaszugrohren, die vom Boden der Brennkammer ausgehen. Diese Rohr sind an jeder Stelle mit Gefälle in ein Rauchgas- und Kondensatsammel-kammer geführt und mit Hüllrohren für die Durchleitung des Wärmeträgermediums versehen. Die Heizgaszugrohre (4) sind bezüglich ihrer Wandung (3) zwischen ihren zylindrischen Anschlußenden schraubenlinienförmig verdrillt und aus Edelstahl gebildet. Der wasserführende Innenraum (5) des Gehäuses (6) ist durch eine Trennwand (11) in zwei benachbarte Teile (6', 6'') gegliedert. Der Vorlaufstutzen (8) ist im oberen Bereich des oberen Teiles (6'') und der Rücklaufstutzen (9) im oberen Bereich des unteren Teiles (6') des Gehäuses (6) angeordnet. Im unteren Teil (6'), von der Trennwand (11) ausgehend, sind die Hüllrohre (7) oberhalb der mit Abzuganschluß versehenen Rauchgas- und Kondensatsammelkammer (2) frei in diesen unteren Teil (6') aus-mündend angeordnet.

Fig.1

EP 0 106 344 A2

- 1 -

## Kondensationsheizkessel
=========================

Die Erfindung betrifft einen Kondensationsheizkessel gemäß Oberbegriff des Hauptanspruches.

Kondensationsheizkessel sind ganz allgemein
nach der FR-PS 2 479 956 bekannt. Bei solchen
Kesseln werden die Rauchgase bewußt so weit
heruntergekühlt, daß mit Sicherheit Kondensat
anfällt. Abgesehen von der recht aufwendigen
und komplizierten Bauweise des vorbekannten
Heizkessels (schraubenlinienförmige Ausbildung
der Heizgaszugrohre) besteht selbst bei einer
Ausführung mit Sturzbrennkammer die Gefahr, daß
sich in dieser Kondensat am Boden sammelt und
nicht direkt in die Heizgaszüge abfließen kann.
Da außerdem die schraubenlinienförmig gewickelten Heizgaszugrohre völlig frei im wasserführenden Innenraum des Gehäuses verlaufen, ist
deren Intensivkühlung nicht sehr gut gewährleistet.

Eine bessere Lösung stellt hierzu schon ein
Heizungskessel nach der DE-OS 30 19810 dar, bei

- 2 -

dem das im Wärmetauscherbau allgemein bekannte
Doppelrohrprinzip für die Führung der Austauschmedien verwendet ist, d.h., von Hüllrohren umgebene Gaszugrohre verbindende Brenn- und Abgassammelkammer und die Hüllrohre verbinden
eine Rücklaufzuströmkammer und einen die Brennkammer umgebenden Wassermantel, von dem auch
der Kesselvorlauf abgeht.

Da sich die wesentliche Austauschstrecke bei
diesem Kessel auf die Heizgaszugrohre beschränkt, wo sie von den Hüllrohren umgeben
werden, müssen derartige Kessel relativ hoch
bzw. lang gebaut werden, wenn der gewünschte
Effekt überhaupt erreicht werden soll, zumal
das Wärmeträgermedium die Ringkanäle zwischen
Zugrohren und Hüllrohren in Gegenrichtung zum
Gasstrom passiert und am oberen Ende der Hüllrohre die Temperaturdifferenz negativ beeinflußt wird.

Der Erfindung liegt demgemäß die Aufgabe zugrunde, einen Heizkessel dieser Art dahingehend
zu verbessern, daß die Wärmeübergangsverhältnisse und damit die Temperaturdifferenzen ($\Delta$T)

- 3 -

zwischen den beteiligten Medien günstiger gestaltet werden können, um insoweit auch zu
einem Kondensat- bzw. sogenannter Brennwertkessel zu gelangen, der relativ kleine Bauhöhen bzw. Baulängen zuläßt.

Diese Aufgabe ist mit einem Kessel der eingangs genannten Art nach der Erfindung durch
das im Kennzeichen des Hauptanspruches Erfaßte gelöst. Vorteilhafte Weiterbildungen ergeben sich nach den Unteransprüchen.

Diese Ausbildung verläßt praktisch nicht bekannte Heizkesselkonstruktionen, wesentlich
ist aber, daß für die Heizgaszugrohre auf Edelstahlrohre mit verdrillten Wandungen zurückgegriffen ist, die einen langen Strömungsweg
mit entsprechend intensiver Kühlung gewährleisten, wobei an dem langen Strömungsweg nicht
nur das Gas, sondern auch das Kühlmedium
(Wärmeträger) teilnimmt.

Für einen optimalen Wärmeaustausch bzw. eine
optimale Herunterkühlung der Abgase auf möglichst kurzer Baulänge des Kessels ist in
Kombination mit den verdrallten Heizgaszug-

- 4 -

rohren wesentlich, daß auch die Hüllrohre nach
außen sich nicht selbst überlassen bleiben,
sondern hinsichtlich der Kühlung aktiviert
werden. Dies geschieht in einfacher Weise dadurch, daß der lediglich durch eine Trennwand
abgeteilte untere Raum des ganzen Gehäuses gewissermaßen als Kühlraum für die Gesamtlänge
der Hüllrohre dient, die im unteren Bereich
dieses Raumes einfach frei ausmünden, für den
es übrigens in diesem Zusammenhang auch wesentlich ist, daß der Kesselvorlaufstutzen
im oberen Bereich dieses Raumes angeordnet ist.

Die Zweiteilung des wasserführenden Innenraumes des insgesamt einteiligen Außengehäuses
sorgt dafür, daß sich die im oberen Teil befindliche Brennkammer bezüglich ihrer Wände
schnell aufheizt, so daß dort, wenn überhaupt,
ein Minimum an Kondensat anfällt, das jedoch
unmittelbar durch die Heizgaszugrohre aus Edelstahl mit abfließen kann.

Der erfindungsgemäße Heizungskessel und vorteilhafte Weiterbildungsformen werden nachfolgend anhand der zeichnerischen Darstellung
von Ausführungsbeispielen näher erläutert.

- 5 -

Es zeigt schematisch

Fig. 1 einen Längsschnitt durch den Heizkessel;

Fig. 2 einen Querschnitt durch den Heizkessel gemäß Fig. 1;

Fig. 3 einen Längsschnitt durch den Kondensationsheizkessel in besonderer Ausführungsform;

Fig. 4 in Seitenansicht eine Weiterbildungsform des Heizkessels nach Fig. 3;

Fig. 5 im Schnitt eine besondere Ausführungsform des Abgas- und Kondensatsammelraumes;

Fig. 6 eine weitere Ausführungsform des Heizkessels und

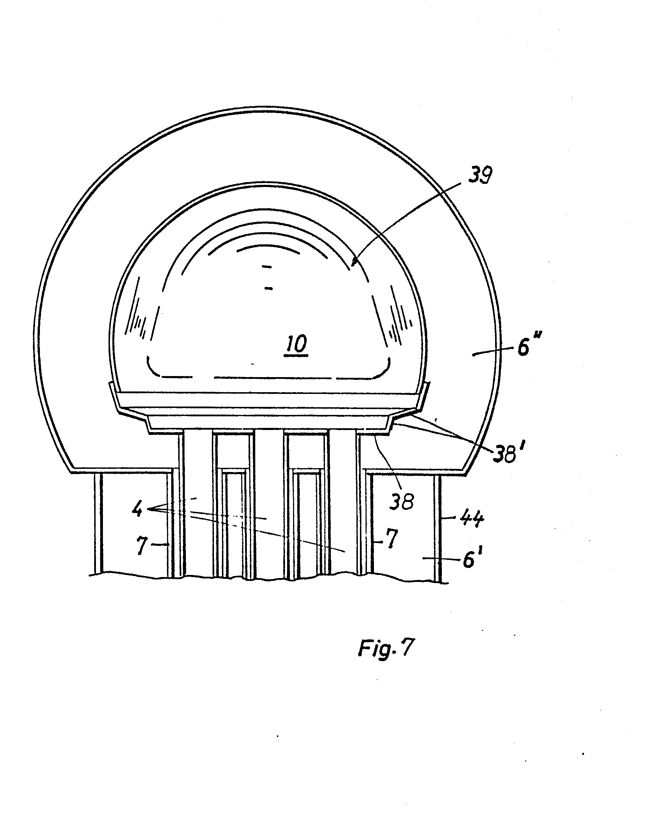

Fig. 7 das obere Teil gemäß Fig. 6 im Schnitt.

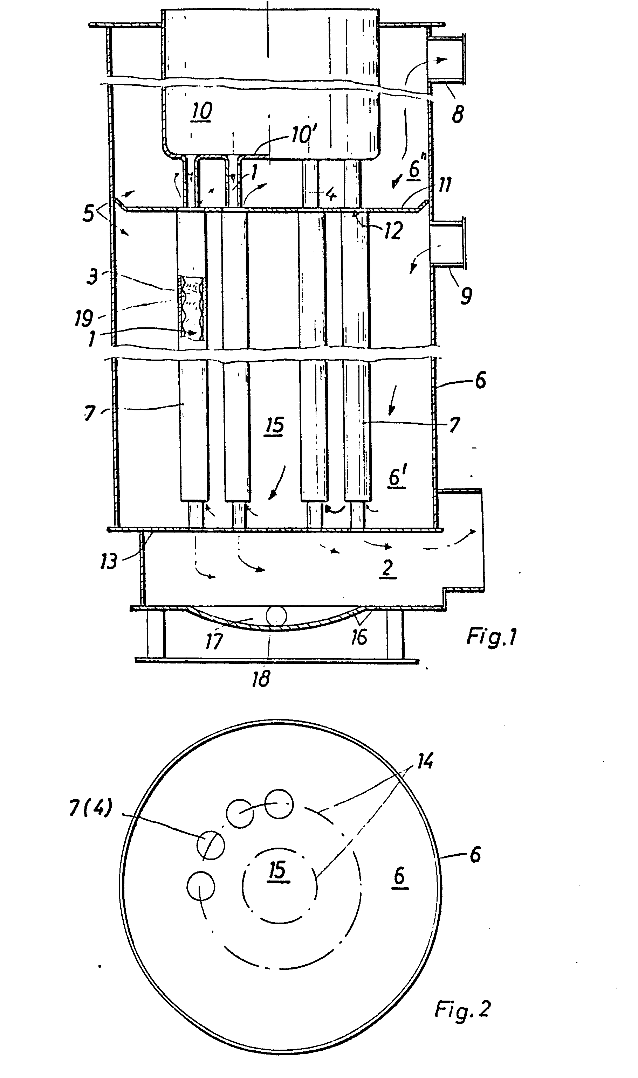

Wie aus Fig. 1 erkennbar, ist der wasserführende Innenraum 5 des Gehäuses 6 einfach durch nur
eine Trennwand 11 in zwei Teile 6', 6'' gegliedert, wobei im oberen Teil 6'' die topfförmige
Sturzbrennkammer 10 angeordnet ist. Wie dargestellt, ist der Kesselvorlaufstutzen 8 oben am
oberen Teil 6'' und, was besonders wesentlich
ist, der Kesselrücklaufstutzen 9 oben am unte-

- 6 -

ren Teil 6' angeordnet. Die Heizgaszugrohre 4 mit ihren verdrillten Wandungen 3, sind an Öffnungen des Brennkammerbodens 10' angesetzt, erstrecken sich durch den unteren Teil 6' des wasserführenden Innenraumes 6 und münden in die unten befindliche Rauchgas- und Kondensatsammelkammer 2 bzw. in entsprechende Öffnungen der Rauchgassammelkammerdecke 13. Im Bereich des Teiles 6' sind die verdrillten Heizgaszugrohre 4 in Hüllrohren 7 angeordnet, die mit ihren oberen Enden 7' in entsprechenden Öffnungen 12 der Trennwand 11 angesetzt sind. Die unteren Enden 7'' der Hüllrohre 7 enden jedoch in Distanz (etwa einem Rohrdurchmesser entsprechend) oberhalb der Rauchgassammelkammerdecke 13. Zwecks einfachem Schweißanschluß und einfacher Öffnungsform im Brennkammerboden 10' und Rauchgassammelkammerdecke 13 sind die Rauchgaszugrohre 4 in ihren Anschlußbereichen zylindrisch d.h. unverdrillt ausgebildet.

Durch diese Ausbildung ergibt sich für den Wärmeträger bzw. das Kühlmedium (Wasser) eine Strömungsführung vom Rücklaufstutzen 9 zum Vorlaufstutzen 8, wie mit Strömungspfeilen in Fig. 1

- 7 -

angegeben, wobei der Übergang vom Teil 6' zum Teil 6'' des Innenraumes 6 nur durch den langen Weg der verdrillten Ringkanäle 19 (Fig. 1) zwischen den Heizgaszugrohren 4 und den Hüllrohren 7 erfolgen kann. Wie ohne weiteres erkennbar, sind dabei die Hüllrohre 7 ebenfalls über ihre gesamte Länge von außen gekühlt, da ja in diesem Raum zunächst das relativ kalte Rücklaufwasser einströmt.

Die Rauchgas- und Kondensatsammelkammer 2, die ebenfalls aus Edelstahlblech gebildet ist, und die ggf. unter Gebläsesaugzug stehen kann, hat natürlich im Boden 16 einen tiefliegenden Kondensatsammelbereich 17, an dem ein Kondensatablaufstutzen 18 angeschlossen ist.

Zentrisch kann im Bedarfsfall zwischen den bspw. auf konzentrischen Kreisen 14 angeordneten Hüllrohren 7 ein Innenraum 15 freigehalten werden (Fig. 2), so daß in diesem ein Brauchwasserspeicher (nicht dargestellt) eingebaut werden könnte.

- 8 -

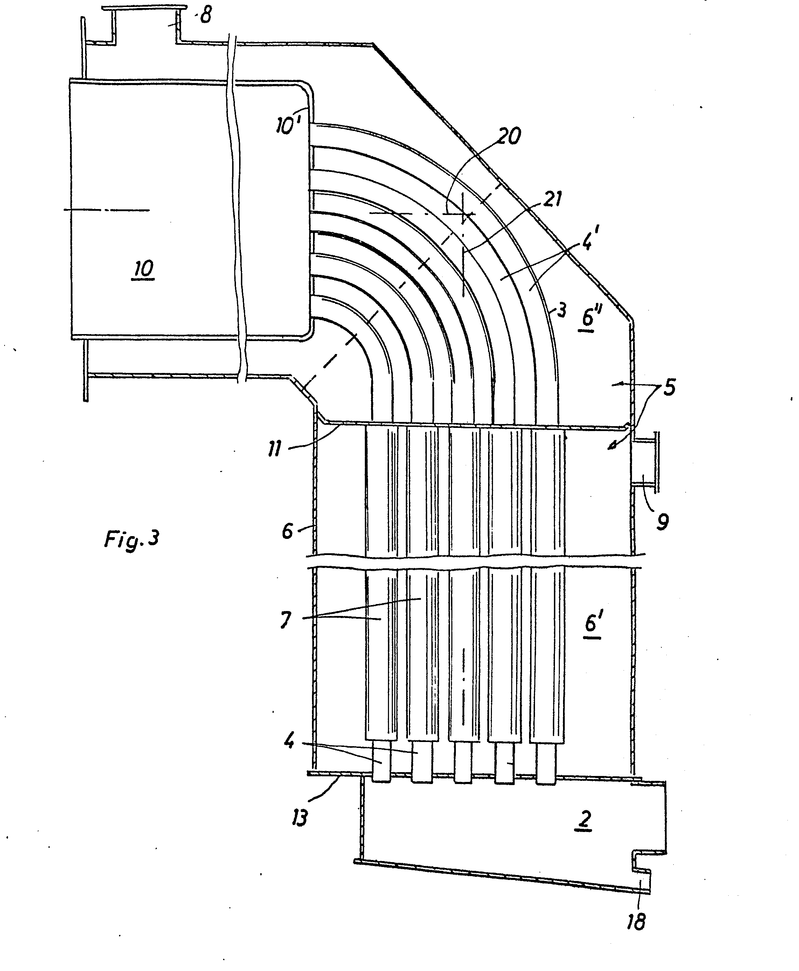

Die Ausführungsform gemäß Fig. 3 ist insbesondere für Kessel dieser Art mit größerer Leistung bestimmt. Wie erkennbar, sind hierbei unter Beibehaltung des vorbeschriebenen Grundprinzips die beiden Teile 6', 6'' des Gehäuses winklig zueinander versetzt und zwar gemäß Darstellungsbeispiel derart, daß die horizontale Längsachse 20 der Brennkammer 10 rechtwinklig die Längsachse 21 des unteren Teiles 6' schneidet.

Der sich dadurch ergebende Raumzwickel im Teil 6'' wird durch entsprechend gebogene oder geneigte Rauchgaszugrohre 4' durchgriffen, die glatte aber auch verdrillte Wände haben können.

Die Anordnung, wie in Fig. 3 dargestellt, wird zwar bevorzugt, die Einhaltung der rechtwinkligen Zuordnung der Längsachse 20, 21 ist jedoch nicht zwingend, d.h. es sind auch andere Winkelstellungen möglich, sofern nur an jeder Stelle ein Gefälle gewährleistet ist.

- 9 -

So könnte sich auch die Trennwand in Schrägstellung befinden, wie gestrichelt angedeutet, wobei dann die Hüllrohre 7 an ihren oberen Enden entsprechend gebogen bis an die
Trennwand 11 herangeführt sind.

Bei dieser Ausbildung, aber auch bei der nach
Fig. 1 besteht im übrigen auch die Möglichkeit, separate Heizreise anzuschließen, die
mit einer durchschnittlich niedrigeren Heizungstemperatur betrieben werden, bspw. eine
Fußbodenheizung, deren Vor- und Rücklaufanschlüsse dann nur am unteren Teil 6' angeschlossen sind.

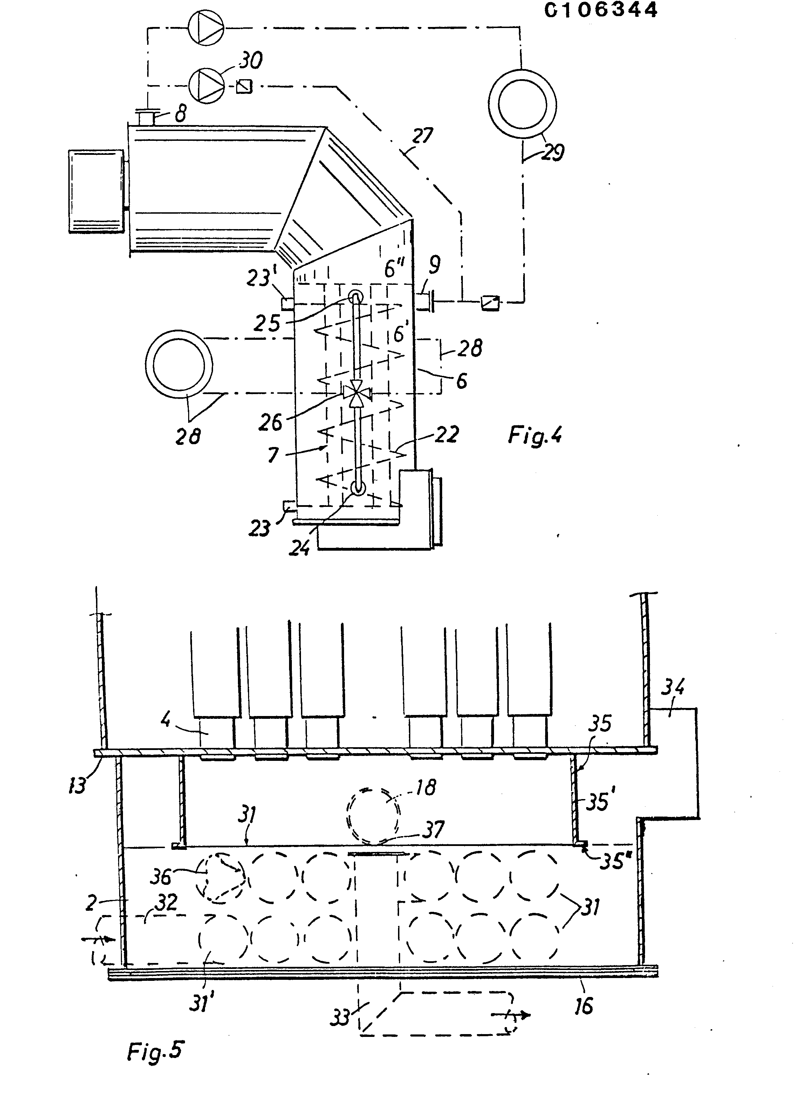

Anknüpfend an die Ausführungsform nach Fig. 3
ist in der Fig. 4 eine weitere verbesserte Ausführungsform verdeutlicht, die sich jedoch auch
an der Ausführungsform nach Fig. 1 verwirklichen ließe. Dieser Ausführungsform nach Fig. 4
liegt folgende Überlegung zugrunde:
Ein Problem bei Kondensationskesseln, wenn sie
an einer Warmwasserheizung angeschlossen sind,
und das ist häufig der Fall, besteht dann, daß

- 10 -

im Winter also bei größtem Wärmebedarf, die
Heizung höhere und höchste Temperatur annimmt.
Das Heizungsrücklaufwasser hat dann meist eine
Temperatur, die über 40$^{o}$ C liegt, und es findet
kaum noch eine Kondensation der Verbrennungsgase statt. Man kann hier bspw. nachhelfen, indem man, wenn eine Fußbodenheizung kombiniert
ist mit einer Radiatorheizung, den Fußbodenheizkreis durch den unteren Teil 6' des Kessels leitet, also da, wo die eigentliche Kondensation
der Verbrennungsgase erfolgt. Der Radiatorenheizkreis wird dann oben angeschlossen. Eine
Fußbodenheizung läuft in der Regel mit Vorlauftemperaturen um ca. 30$^{o}$ C, so daß die Rücklauftemperatur nur etwa 20$^{o}$ oder 25$^{o}$ C beträgt, wodurch aber eine Kondensation der Verbrennungsgase gewährleistet ist.

Eine weitere Möglichkeit, um den unteren Teil
6' kälter zu machen, besteht darin, daß man einen Wärmetauscher einsetzt, durch den das Kaltwasser eingeleitet wird. Dieser Wärmetauscher 22
wird Warmwasserbereitern vorgeschaltet, d.h.,
wenn warmes Wasser gezapft wird, dann strömt Kaltwasser aus der Wasserleitung erst durch diesen WT 22 und dann in den außerhalb des Gehäuses 6 angeordneten Warmwasserspeicher und wird dadurch vorgewärmt. Da Trinkwasser in manchen Gebieten eine Temperatur von $12^{\circ}$ C und im Winter von ca. $8^{\circ}$ C oder weniger hat, findet eine starke Kühlung statt.

In der praktischen Ausführung ist dies im einzelnen in den Fig. 4 verdeutlicht. Grundsätzlich bei allen dargestellten Ausführungsformen kann der Wärmetauscher 22 in Form eines schraubenlinienförmig verlaufenden Rohres vorgesehen werden, das um das ganze Bündel der Hüllrohre 7 herumläuft. Wesentlich ist dabei, daß der Kaltwasseranschluß 23 im Bereich der unteren Enden der Hüllrohre 7 angeordnet ist und das Warmwasser oben bei 23' abgezogen wird.

Was den Anschluß eines ausreichend kalten Rücklaufwasser liefernden Fußbodenheizkreises 28 betrifft, so sind dafür am unteren Teil 6' Niedertemperaturheizkreisanschlüsse 24, 25 vorgesehen, wobei ebenfalls wieder wesentlich ist, daß sich der Niedertemperaturrücklaufanschluß 24 im Bereich der unteren Enden der
Hüllrohre 7 befindet.

Zweckmäßig sind diese Anschlüsse 24, 25
mit einem Vierwegemischventil 26 verbunden,
mit dessen freien Anschlüssen, wie erkennbar, dann der Niedertemperaturheizkreis 28
verbunden ist.

Wie vorbeschrieben, ist der eigentliche Heizungskreis 29 mit den Vor- und Rücklaufanschlüssen 8, 9 des Gebäuses 6 verbunden, wie
dies in Fig. 4 erkennbar ist. In diesem Heizungskreis ist vorteilhaft noch eine Bypaßleitung 27 mit Ladepumpe 30 vorgesehen, die
einmal zur Wirkung kommt, wenn nur der Niedertemperaturheizkreis 28 in Betrieb ist oder
wenn nur der Wärmetauscher 22 mit Wärme beaufschlagt werden soll, d.h., dieser Bypaß
stellt den Kesselkreislauf zwischen Ober- und
Unterteil 6'', 6' sicher, wenn nur der WT 22
und/oder der Niedertemperaturheizkreis 28 in
Betrieb sein sollen.

- 13 -

Wie aus Fig. 5 erkennbar, ist in der Kondensatsammelkammer 2 ein Wärmetauscher 31 in
Form eines zweilagig spiralförmig verlaufenden Rohres 36 mit Zu- und Ablaufanschlüssen
32, 33 angeordnet, wobei das Rohr 31' schraubenlinienförmig verbundene Wände 36 aufweist,
die dem Wärmetausch besonders förderlich sind.

Der Kondensatsammelraum 2 ist in bezug auf den
Rauchgasabzug 34 durch eine Blende 35 abgeschirmt, so daß die aus den Heizgaszugrohren
4 austretenden Rauchgase bei gefülltem Kondensatsammelraum 2 nur durch das Kondensat hindurch zum Rauchgasabzug 34 gelangen können,
was einen ausreichenden Druck der Rauchgase
voraussetzt.

Wie dargestellt, ist die Blende 35 als Ringblende 35' ausgebildet, wobei deren Unterkante
35'' in Höhe Unterrand 37 des Kondensatüberlaufanschlusses 18 angeordnet ist, der somit
den möglichen Höchststand des Kondensates in
der Kondensatsammelkammer 2 bestimmt.

- 14 -

Der Kondensatüberlaufanschluß 18 muß nicht
zwingend, wie dargestellt, auf Höhe Unterrand
36 der Blende 35 angeordnet werden, sondern
es ist auch möglich, diesen Anschluß 18 unmittelbar über dem Boden 16 oder am Boden
selbst anzuordnen, sofern dieser Anschluß 18
dann außerhalb der Kondensatsammelkammer 2
mit einer geeigneten und vorzugsweise biegsamen Leitung versehen ist (nicht dargestellt),
mit der je nach Niveaueinstellung sich sammelndes Kondensat bis auf Höhe Unterrand 36 der
Blende 35 angestaut werden kann, d.h., bei dieser Ausführungsform kann der Kessel entweder
mit ungestauter bzw. gestauter Kondensatabfuhr
gefahren werden.

Dieser im Kondensatsammelraum 2 angeordnete
Wärmetauscher 31 ist insbesondere für die
Durchleitung eines gasförmigen Mediums als Sekundärmedium bestimmt, womit aber andere Wärmeträgermedien (bspw. Wasser) nicht ausgeschlossen sein sollen. Vorzugsweise kommt Luft in
Frage, die nach Passage des Wärmetauschers und
entsprechender Wärmeaufnahme bspw. in geeigneter

- 15 -

Weise in zu beheizende Räume geleitet werden
kann.

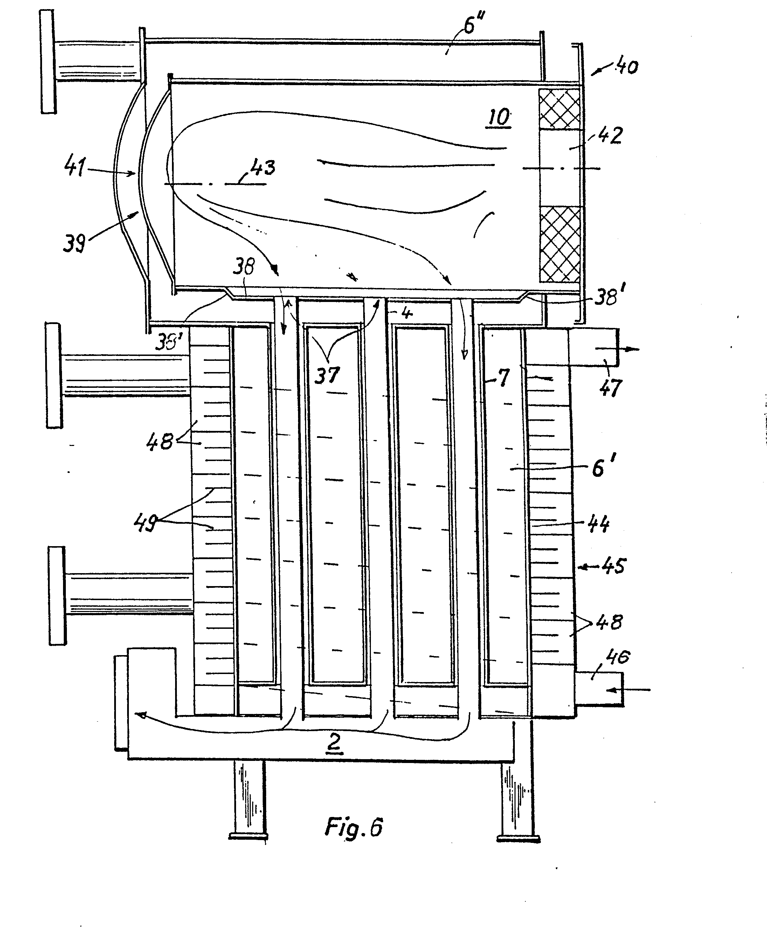

Bezüglich weiterer Verbesserungsmöglichkeiten,
um einen derartigen Kondensationsheizkessel
hinsichtlich der Flammführung im Bereich der
Brennkammer und damit auch hinsichtlich seines
Wirkungsgrades weiter zu optimieren und auch
räumlich noch günstiger zu gestalten, wird auf
Fig. 6 Bezug genommen.

Bei dieser Ausbildung brennt die Brennerflamme
nicht direkt in Richtung der Heizgaszüge, sondern quer dazu, wobei die quer aufgesetzte
Brennkammer 10 den ganzen Kessel kompakter und
in seiner äußeren Raumbeanspruchung, insbesondere hinsichtlich seiner Höhe kleiner werden läßt.

Außerdem fallen, da die Heizgaszugrohre 4 direkt
an den Boden der Brennkammer 10 angeschlossen
sind, relativ lange und gekrümmte Verbindungsrohre von der Brennkammer zum äußeren Teil des
wasserführenden Gehäuses weg.

Wie aus Fig. 6 erkennbar, sitzt die Brennkammer
10 mit ihrem wasserführenden Gehäuseteil 6''

- 16 -

quer auf dem unteren Gehäuseteil 6' bzw. verläuft quer zu den Heizgaszugrohren 4, die mit
ihren Einmündungen 37 direkt an den Flachboden
38 der Brennkammer 10 angeschlossen sind. Vorteilhaft ist dieser Flachboden 38 mindestens in
Teilbereichen 38' mit Gefälle versehen, so daß
evtl. sich schon in der Brennkammer 10 bildendes Kondensat, durch das Gefälle orientiert,
den Einmündungen 37 zufließt und durch die Heizgaszüge 4 nach unten abfließen kann.

Die Brennkammerwand 39, die der brennerseitigen
Abschlußwand 40 gegenüberliegt, ist gewölbt ausgebildet, wobei das Wölbungsmaximum 41 und auch
die Öffnung 42 für den Brenner (nicht dargestellt) in der Abschlußwand 40 vorteilhaft oberhalb der Längsmitte 43 der Brennerkammer 10 angeordnet sind.

Dadurch kann die Brennerflamme im wesentlichen
über die ganze Länge der Brennerkammer 10 ausbrennen, erhält aber durch die besonders ausgebildete Wölbung 39 eine schräg nach unten gegen
die Einmündungen 37 gerichtete Komponente.

- 17 -

Durch die aus Fig. 6 weiter erkennbare Ausbildung ist es möglich, den Kessel, der ja möglichst optimal bzgl. der Heiz- und Rauchgastemperatur bis zum Kondensatanfall heruntergekühlt werden soll, auch von außen zu kühlen, dabei die Kühlluft entsprechend zu erwärmen und diese ggf. in die zu heizenden Räume zu leiten, wodurch deren Temperaturniveau schon etwas angehoben werden kann. Selbstverständlich wäre es dabei auch möglich, diese erwärmte Luft ganz oder zum Teil auch dem Brenner zuzuführen.

Durch diese Ausbildung, die relativ einfach zu verwirklichen ist, ist der weitaus aufwendigere Einbau von mit Kühlgas beaufschlagbaren Elementen im unteren Teil bzw. im Kondensatsammelraum im Sinne der Fig. 5 vermeidbar, womit aber nicht ausgeschlossen sein soll, solche eingebauten Wärmetauschelemente 31 zusätzlich vorzusehen.

Die dargestellte Anordnung der Brennkammer 10 quer über dem unteren Teil 6' des wasserführenden Gehäuse 6 ist für den nachfolgend beschriebenen Sachverhalt nicht wesentlich. Wie aus Fig. 6 erkennbar, ist auf dem Mantel 44 des unte-

- 18 -

ren Gehäuseteiles 6' ein Luftführungsmantel 45 mit Luftzufuhr- und Luftableitungsanschlüssen 46, 47 angeordnet, der das ganze untere Gehäuseteil 6' umschließt. Wegen des gewünschten Kühleffektes ist der Luftzufuhranschluß 46 natürlich unten angeordnet.

Vorteilhaft ist dieser Luftführungsmantel 45 insgesamt als schraubenlinienförmig verlaufender Kanal 48 ausgebildet.

Um die durchgeleitete Luft, die mittels Saug- oder Druckgebläse (nicht dargestellt) gefördert wird, entweder im Mantel 45 bzw. im Kanal 48 optimal zu verteilen, sind im Mantel 45 bzw. im Kanal 48 entsprechend schraubenlinienförmig verlaufende Luftführungsleitstege 49 angeordnet, die zweckmäßig wärmeleitend mit dem Mantel 36 des unteren wasserführenden Gehäuseteiles verbunden sind.

- 1 -

Patentansprüche:

1. Kondensationsheizkessel, bestehend aus einem wasserführenden, Vor- und Rücklaufanschlüsse aufweisenden Gehäuse mit Brennkammer und Heizgaszugrohren, die vom Boden der Brennkammer ausgehend an jeder Stelle mit Gefälle in eine Rauchgas- und Kondensatsammelkammer geführt sind und mit Hüllrohren Ringkanäle für die Durchleitung des Wärmeträgermediums vom Rücklauf- zum Vorlaufanschluß begrenzen, d a d u r c h   g e k e n n z e i c h n e t , daß die Heizgaszugrohre (4) bezüglich ihrer Wandung (3) zwischen ihren zylindrischen Abschlußenden schraubenlinienförmig verdrillt und aus Edelstahl gebildet sind, daß der wasserführende Innenraum (5) des Gehäuses (6) durch eine Trennwand (11) in zwei benachbarte Teile (6', 6'') gegliedert und der Vorlaufstutzen (8) im oberen Bereich des oberen Teiles (6'') und der Rücklaufstutzen (9) im oberen Bereich des unteren Teiles (6') des Gehäuses (6) angeordnet ist, in welchem unteren Teil (6'), von der

0106344

- 2 -

Trennwand (11) ausgehend, die Hüllrohre (1) verlaufen, die oberhalb der mit Abzuganschluß versehenen Rauchgas- und Kondensatsammelkammer (2) frei in diesen unteren Teil (6') ausmündend angeordnet sind.

2. Heizkessel nach Anspruch 1, d a d u r c h g e k e n n z e i c h n e t , daß die Hüllrohre (7) in einer Distanz oberhalb der Rauchgassammelkammerdecke (13) enden, die etwa ihrem Durchmesser entspricht.

3. Heizkessel nach Anspruch 1, d a d u r c h g e k e n n z e i c h n e t , daß die Hüllrohre (7) mit den sie durchgreifenden Heizgaszugrohren (4) im Verlauf konzentrierter Kreise (14) unter Freihaltung eines zylindrischen Innenraumes (15) angeordnet sind.

4. Heizkessel nach Anspruch 1, d a d u r c h g e k e n n z e i c h n e t , daß die Teile (6', 6'') des Gehäuses (6) geneigt zueinander angeordnet sind.

5. Heizkessel nach Anspruch 1, d a d u r c h
   g e k e n n z e i c h n e t , daß im unteren Teil (6') des Gehäuses (6) ein die Hüllrohre (7) insgesamt umfassender Wärmetauscher (22) und dessen Kaltwasseranschluß (23)
   im Bereich der unteren Enden der Hüllrohre (7)
   am Gehäuse (6) angeordnet ist.

6. Heizkessel nach Anspruch 1, d a d u r c h
   g e k e n n z e i c h n e t , daß in der
   Kondensatsammelkammer (2) ein Wärmetauscher
   (31) mit Zu-/Ableitungsanschlüssen (32, 33)
   für ein Sekundärmedium angeordnet und die
   Kondensatsammelkammer (2) in bezug auf den
   Rauchgasabzuganschluß (34) mit einer Blende
   (35) versehen ist, deren Unterkante (36) in
   Höhe Unterrand (37) des Kondensatüberlaufanschlusses (18) bzw. Kondensatüberlaufes angeordnet ist.

7. Heizkessel nach Anspruch 1, d a d u r c h
   g e k e n n z e i c h n e t , daß die Brennkammer (10) quer zur Längsrichtung der Heizgaszugrohre (4) und über deren Einmündungen

- 4 -

(37) angeordnet ist und daß die Brennkammer (10) für den Anschluß der Heizgaszugrohre (4) mit einem Flachboden (38) versehen ist.

8. Heizkessel nach Anspruch 7, d a d u r c h
g e k e n n z e i c h n e t , daß der
Flachboden (38) mindestens in Teilbereichen mit Gefälle (38') und der brennerseitigen Anschlußwand (40) gegenüberliegende
Boden (39) der Brennkammer (10) gewölbt
ausgebildet ist, wobei das Wölbungsmaximum
(41) und Mitte Brenneröffnung (42) der Anschlußwand (40) oberhalb der Längsmitte
(43) der Brennkammer (10) angeordnet sind.

9. Heizkessel nach Anspruch 1, d a d u r c h
g e k e n n z e i c h n e t , daß das
wasserführende Gehäuse (6) im Bereich des
unteren Teiles (6') außenseitig mit einem
Luftführungsmantel (45) mit Luftzu- und Abströmungsanschlüssen (46, 47) versehen ist.

0106344

- 5 -

10. Heizkessel nach Anspruch 9, d a d u r c h
    g e k e n n z e i c h n e t , daß der
    Luftführungsmantel (45) in Form eines
    schraubenlinienförmig verlaufenden Kanales
    (48) ausgebildet ist.

Fig.1

Fig.2

Fig.3

Fig.4

Fig.5

Fig.6

C106344

Fig. 7